# EUROPEAN PATENT APPLICATION

(11) **EP 4 633 233 A1**
(43) Date of publication of application: **15.10.2025**
(21) Application number: 23907303.4
(22) Date of filing: 20.09.2023
(51) Int. Cl.: H04W 28/02, H04W 8/24, H04W 72/21

(54) **BUFFER STATUS REPORT METHOD AND DEVICE CONSIDERING REMAINING TIME INFORMATION IN MOBILE COMMUNICATION SYSTEM**

(30) Priority: 19.12.2022 KR 20220178418
(71) Applicant: Samsung Electronics Co., Ltd., Suwon-si, Gyeonggi-do 16677 (KR)
(72) Inventor: SUN, Weiping, Suwon-si Gyeonggi-do 16677 (KR); BAEK, Sangkyu, Suwon-si Gyeonggi-do 16677 (KR); AGIWAL, Anil, Suwon-si Gyeonggi-do 16677 (KR); KANG, Hyunjeong, Suwon-si Gyeonggi-do 16677 (KR)
(74) Representative: Gulde & Partner
(86) International application number: PCT/KR2023/014253
(87) International publication number: WO 2024/136017

(57) **Abstract**

The present disclosure relates to a 5G or 6G communication system for supporting a higher data transmission rate. The present disclosure provides a buffer status report (BSR) method for a terminal, a method whereby a base station acquires a BSR, and a terminal, base station, and communication system related to same.

## Description

### [Technical Field]

The disclosure relates to the communication field and, more particularly, to operations of a terminal and a base station. In particular, the disclosure relates to a method for transmitting a buffer status report (BSR) by a terminal, a method for acquiring a BSR by a base station, and a terminal, a base station, and a communication system related thereto.

### [Background Art]

5G mobile communication technologies define broad frequency bands to enable high transmission rates and new services, and can be implemented not only in "Sub 6GHz" bands such as 3.5GHz, but also in ultrahigh frequency ("Above 6GHz") bands referred to as mmWave such as 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

Embodiments set forth herein are to provide a device and a method capable of effectively providing services in a wireless communication system. Various embodiments of the disclosure provide a method for transmitting a buffer status report (BSR) by a terminal, a method for acquiring a BSR by a base station, and a terminal, a base station, and a communication system related thereto.

### [Solution to Problem]

An embodiment of the disclosure provides a buffer status reporting method performed by a terminal, the method including receiving a capability request message for a buffer status report from a base station, transmitting capability information for the buffer status report to the base station, receiving configuration information for the buffer status report from the base station, determining a buffer status report format, based on the configuration information, and transmitting a buffer status to the base station, based on the buffer status report format.

In an embodiment, the capability information includes information on whether the terminal is capable of reporting the size of uplink data meeting a remaining time threshold to the base station, and the configuration information may include at least one of a remaining time upper bound for the uplink data and a remaining time lower bound for the uplink data.

In an embodiment, the determining of the buffer status report format includes determining the buffer status report format, based on the number of logical channel groups (LCGs), and in case that the number of logical channel groups is at least two, the buffer status report format includes a field indicating whether a buffer size corresponding to each of the at least two logical channel groups exists.

In an embodiment, the buffer status report format may include information indicating the size of data satisfying the remaining time threshold among uplink data stored in a buffer of the terminal.

An embodiment of the disclosure provides a buffer status reporting method performed by a base station, the method including transmitting a capability request message for a buffer status report to a terminal, receiving capability information for the buffer status report from the terminal, transmitting configuration information for the buffer status report to the terminal, and receiving a buffer status from the terminal, based on a buffer status report format.

In an embodiment, the capability information includes information on whether the terminal is capable of reporting the size of uplink data meeting a remaining time threshold to the base station, and the configuration information may include at least one of a remaining time upper bound for the uplink data and a remaining time lower bound for the uplink data.

In an embodiment, the buffer status report format is determined based on the number of logical channel groups (LCGs), and in case that the number of logical channel groups is at least two, the buffer status report format includes a field indicating whether a buffer size corresponding to each of the at least two logical channel groups exists.

In an embodiment, the buffer status report format may include information indicating the size of data satisfying the remaining time threshold among uplink data stored in a buffer of the terminal.

### [Advantageous Effects of Invention]

The disclosure provides a device and a method capable of effectively providing services in a wireless communication system.

### [Brief Description of Drawings]

FIG. 1 illustrates the structure of an NR system according to an embodiment of the disclosure.
FIG. 2 illustrates a radio protocol structure in an NR system according to an embodiment of the disclosure.
FIG. 3 illustrates a method of determining a buffer status report (BSR) format by a UE in an NR system according to an embodiment of the disclosure.
FIG. 4 illustrates a short BSR/short truncated BSR MAC CE format of an NR system according to an embodiment of the disclosure.
FIG. 5 illustrates a long BSR/long truncated BSR MAC CE format of an NR system according to an embodiment of the disclosure.
FIG. 6 illustrates a short BSR buffer size reporting table of an NR system according to an embodiment of the disclosure.
FIG. 7 illustrates an MAC subheader format of an NR system according to an embodiment of the disclosure.
FIG. 8 illustrates a procedure in which a base station and a UE identify whether the UE supports a delay-aware BSR via RRC signaling and configure a delay-aware BSR-related configuration according to an embodiment of the disclosure.
FIG. 9 illustrates a procedure in which a UE reports a preferred delay-aware BSR-related configuration to a base station through a UEAssistanceInformation (UAI) message, and a procedure in which a base station reconfigures a delay-aware BSR-related configuration of a UE through an RRC message, according to an embodiment of the disclosure.
FIG. 10 illustrates a short delay-aware BSR MAC CE according to an embodiment of the disclosure.
FIG. 11 illustrates a short delay-aware BSR MAC CE according to another embodiment of the disclosure.
FIG. 12 illustrates a short delay-aware BSR MAC CE according to yet another embodiment of the disclosure.
FIG. 13 illustrates a long delay-aware BSR MAC CE according to an embodiment of the disclosure.
FIG. 14 illustrates a long delay-aware BSR MAC CE according to another embodiment of the disclosure.
FIG. 15 illustrates a long delay-aware BSR MAC CE according to yet another embodiment of the disclosure.
FIG. 16 illustrates a long delay-aware BSR MAC CE according to still another embodiment of the disclosure.
FIG. 17 illustrates a long delay-aware BSR MAC CE according to still yet another embodiment of the disclosure.
FIG. 18 illustrates a long delay-aware BSR MAC CE according to further another embodiment of the disclosure.
FIG. 19 illustrates a method of allocating a new LCID codepoint to a short delay-aware BSR MAC CE and a long delay-aware BSR MAC CE according to an embodiment of the disclosure.
FIG. 20 illustrates a method of allocating a new eLCID codepoint to a short delay-aware BSR MAC CE and a long delay-aware BSR MAC CE according to another embodiment of the disclosure.
FIG. 21 is a block diagram illustrating an internal structure of a UE according to an embodiment of the disclosure.
FIG. 22 is a block diagram illustrating a structure of a base station according to an embodiment of the disclosure.

### [Mode for the Invention]

Hereinafter, exemplary embodiments of the disclosure will be described in detail with reference to the accompanying drawings. It should be noted that, in the accompanying drawings, the same or like elements are designated by the same or like reference signs as much as possible. In addition, a detailed description of known functions or configurations that may make the subject matter of the disclosure unclear will be omitted.

In describing the embodiments of the disclosure, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

In the following description, a base station is an entity that allocates resources to terminals, and may be at least one of a Node B, a base station (BS), an eNode B (eNB), a gNode B (gNB), a wireless access unit, a base station controller, and a node on a network. A terminal may include a user equipment (UE), a mobile station (MS), a cellular phone, a smartphone, a computer, or a multimedia system capable of performing a communication function. Furthermore, the embodiments of the disclosure as described below may also be applied to other communication systems having similar technical backgrounds or channel types to the embodiments of the disclosure. Moreover, based on determinations by those skilled in the art, the embodiments of the disclosure may also be applied to other communication systems through some modifications without significantly departing from the scope of the disclosure. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

In the following description, terms for identifying access nodes, terms referring to network entities or network functions (NFs), terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, some of terms and names defined in the 3rd generation partnership project (3GPP) long term evolution (LTE) standards and/or 3GPP new radio (NR) standards may be used for the sake of descriptive convenience. However, the disclosure is not limited by these terms and names, and may be applied in the same way to systems that conform other standards.

In the next-generation/5G (new radio (NR)) wireless communication system, a UE needs to report a buffer status to a base station in order to assist the base station in scheduling a resource more efficiently. A buffer status report (BSR) indicates a data volume stored in a buffer of the UE and is used for reporting. According to the specification of the NR system, the UE selects an interval index including a buffer data volume to be reported from among a data volume range for each interval defined for each index in a buffer size table, and includes the selected interval index in a BSR.

Buffer status reporting in the NR system may be performed based on medium access control (MAC) layer signaling between the UE and the base station. That is, when the BSR is triggered at a specific transmission timepoint, the UE may include a BSR MAC control element (MAC CE)) in a MAC PDU and transmit the MAC PDU to the base station. Here, the BSR MAC CE indicates a packet volume remaining in a transport buffer of the UE after the MAC PDU is configured, in units of logical channel groups (hereinafter referred to as LCG). The base station may estimate a data volume remaining in the buffer of the UE by using the received BSR. In the NR system, the UE may manage the transport buffer of data to be transmitted to the base station, for each of eight LCGs.

Extended reality (XR) uplink data includes a delay budget, i.e., a remaining time. Based on a time of the data being generated by an application layer of the UE, the data should arrive at the uplink server within a predetermined remaining time to be used as valid data. If the data fails to arrive at the uplink server within the predetermined remaining time, the data loses its application value. The UE buffer size reported via the BSR is designed to report the total volume of data stored in the buffer of the UE. However, the base station does not know how much of the total data is approaching its deadline, i.e., how short the remaining time is. If the base station knows this information, the base station may reflect this information when allocating uplink resources, allowing data with a relatively short remaining time to be transmitted first. On the other hand, in a case of specific data with a very short remaining time, the time taken for actual transmission after the BSR is reported may be shorter than the remaining time. In this case, the data may be transmitted after its application value has already been lost, or may be discarded before a time for transmission. This may lead to waste of uplink resources. When the information reported to the base station includes the volume of data satisfying a predefined specific remaining time threshold (upper or lower bound), the base station may be able to use the information to more efficiently allocate uplink resources when allocating the resources to the UE.

The disclosure provides a method for reporting, to a base station, the volume of data the remaining time of which satisfies a specific threshold, in consideration of the remaining time of data stored in a transport buffer of a UE, and capable of using this information for the uplink scheduling of the base station.

The disclosure is to provide a method for enhancing communication performance between a UE and a base station. Another aspect of the disclosure is to provide a method for reporting a BSR by a UE and a method for acquiring a BSR by a base station.

According to various embodiments of the disclosure, a method for enhancing communication performance between a UE and a base station may be provided. In addition, according to various embodiments of the disclosure, a method for reporting a BSR by a UE and a method for acquiring a BSR by a base station may be provided.

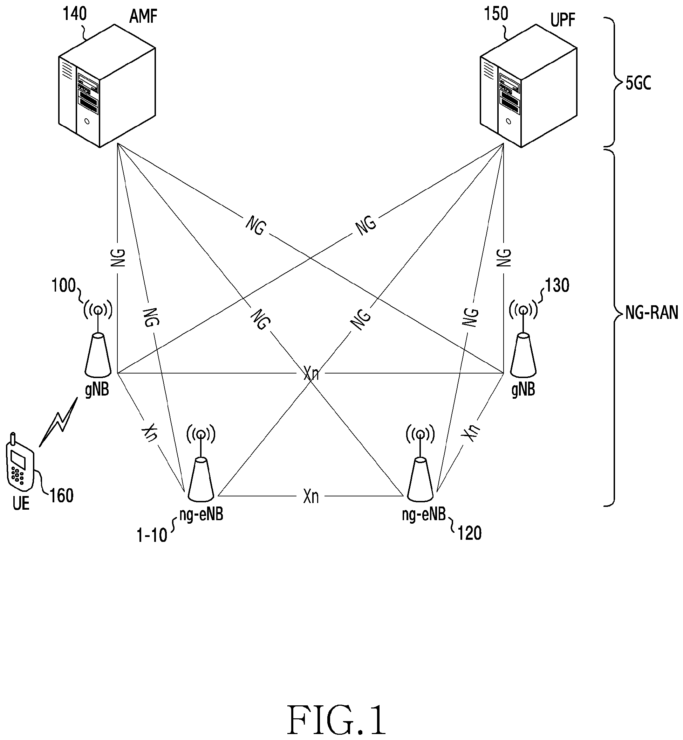

FIG. 1 illustrates a structure of an NR system according to an embodiment of the disclosure.

Referring to FIG. 1, a wireless communication system may include several base stations (e.g., gNB 100, ng-eNB 110, ng-eNB 120, and gNB 130), an access and mobility management function (AMF) 140, and a user plane function (UPF) 150. It is apparent that a wireless communication system is not limited to the structure illustrated in FIG. 1, and may include more or fewer elements.

According to an embodiment of the disclosure, a user equipment (hereinafter, referred to as a UE or terminal) 160 may access an external network through the base stations 100, 110, 120, 130, and the UPF 150.

In FIG. 1, the base stations 100, 110, 120, and 130 may provide radio access to UEs which access a network as access nodes of a cellular network. For example, the base stations 100, 110, 120, and 130 may collect and schedule status information, such as a buffer status of UEs, an available transmission power state, and a channel state in order to service traffic of users, and may support a connection between the UEs and a core network (CN) (in particular, a CN of NR may be referred to as 5GC).

In FIG. 1, the gNBs 1a-05 and 1a-20 may control a plurality of cells, and may apply an adaptive modulation & coding (hereinafter, referred to as AMC) scheme to determine a modulation scheme and a channel coding rate according to a channel state of the UE.

The core network may be a device which is responsible for not only a mobility management function for a UE but also various control functions, and may be connected with the plurality of base stations. In addition, 5GC may interlock with an existing LTE system.

Meanwhile, in a wireless communication system, a user plane (UP) related to transmission of real user data and a control plane (CP) related to connection management may be separately configured. In FIG. 1, the gNB 100 and the gNB 130 may use the UP and CP technologies defined in the NR technology, and the ng-eNB 110 and ng-eNB 120 may use the UP and CP technologies defined in the long-term evolution (LTE) technology although they are connected to 5GC.

The AMF 140 may be a device which is responsible for not only a mobility management function for a UE but also various control functions, and may be connected with the plurality of base stations, and the UPF 150 may refer to a kind of gateway device for providing data transmission. Although not shown in FIG. 1, an NR wireless communication system may include a session management function (SMF). The SMF may manage a packet data network connection such as a protocol data unit (PDU) session to be provided to a UE.

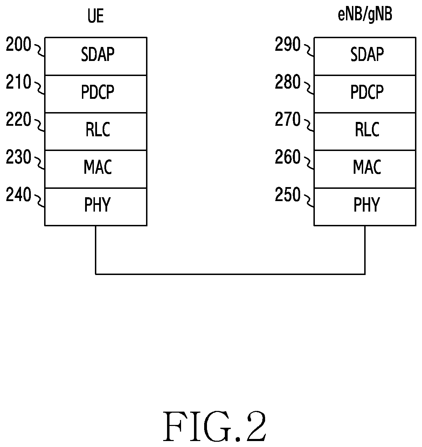

FIG. 2 illustrates a wireless protocol structure in an NR system according to an embodiment of the disclosure.

Referring to FIG. 2, a wireless protocol of an NR system may include, in a UE and a base station, a service data adaptation protocol (SDAP) 200 or 290, a packet data convergence protocol (PDCP) 210 or 280, a radio link control (RLC) 220 or 270, a medium access control (MAC) 230 or 260, and a physical (PHY) 240 or 250, respectively.

The service data adaptation protocol (SDAP) 200 or 290 may perform operations of delivering user data, mapping QoS flows to a specific DRB for uplink and downlink, marking a QoS flow ID for the downlink and uplink, and mapping a reflective QoS flow to a data bearer for uplink SDAP PDUs. A SDAP configuration corresponding to each DRB may be provided from a higher RRC layer. It is apparent that the SDAP is not limited to the examples described above.

The packet data convergence protocol (PDCP) 210 or 280 may be responsible for IP header compression/decompression operations. In addition, the PDCP 210 or 280 may provide in-sequence, out-of-sequence delivery functions and may provide reordering, duplicate detection, retransmission, ciphering and deciphering functions. However, it is apparent that the PDCP is not limited to the examples described above.

The radio link control (hereinafter, referred to as RLC) 220 or 270 may reconstitute a PDCP protocol data unit (PDU) to an appropriate size. In addition, the RLC 220 or 270 may provide in-sequence, out-of-sequence delivery function, as well as ARQ function, concatenation function, segmentation function, reassembly function, re-segmentation function, reordering function, duplication detection function, and error detection function. It is apparent that the RLC is not limited to the examples described above.

The MAC 230 or 260 may be connected with various RLC layer devices configured in one UE, and may perform operations of multiplexing RLC PDUs into MAC PDUs and demultiplexing RLC PDUs from MAC PDUs. In addition, the MAC 230 or 260 may provide a mapping function, a scheduling information reporting function, a HARQ function, a priority handling function between logical channels, a priority handling function between UEs, a MBMS service identification function, a transport format selection function, and a padding function. It is apparent that the MAC is not limited to the examples described above.

The physical (PHY) layer 240 or 250 may perform an operation for channel-coding and modulating higher layer data to generate an OFDM symbol and transmitting the OFDM symbol through a wireless channel or demodulating and channel-decoding the OFDM symbol received through the wireless channel and transmitting the demodulated and channel-decoded OFDM symbol to the higher layer. In addition, a hybrid ARQ (HARQ) is used for additional error correction in the physical layer, and a reception node may transmit information on whether to receive a packet transmitted by a transmission node by using one bit. The one bit information may be referred to as HARQ ACK/NACK information.

Downlink HARQ ACK/NACK information relating to uplink data transmission may be transmitted through a physical channel such as a physical hybrid-ARQ indicator channel (PHICH) in the case of LTE. In the case of NR, it may be determined whether retransmission is required or new transmission should be performed through scheduling information of a UE in a physical dedicated control channel (PDCCH), which is a channel for transmitting downlink/uplink resource allocation, etc. This is because in the NR, an asynchronous HARQ is applied. Uplink HARQ ACK/NACK information relating to downlink data transmission may be transmitted through a physical channel such as a physical uplink control channel (PUCCH) or physical uplink shared channel (PUSCH). The PUCCH is normally transmitted through uplink of a PCell which will be described, but, in case that the base station supports a UE, the PUCCH may be additionally transmitted to a SCell in the corresponding UE, which will be described below. The SCell is referred to as a PUCCH SCell.

Although not illustrated in FIG. 2, a radio resource control (RRC) layer may exist above the PDCP layer of each of the UE and base station, and the RRC layer may transmit and receive access and measurement related configuration control messages for radio resource control.

Meanwhile, the physical layer may include one or a plurality of frequencies/carriers, and a technology for configuring and using a plurality of frequencies simultaneously is referred to as a carrier aggregation technology (hereinafter, referred to as CA). One carrier for communication between a terminal (or user equipment (UE)) and a base station (eNB or gNB) has been used, but the CA technology may additionally use a primary carrier and one or a plurality of sub carriers, thereby significantly increasing a data volume to be transmitted by the number of sub carriers. Meanwhile, in LTE/NR, a cell within a base station that uses a primary carrier may be referred to a primary cell or PCell, and a cell within a base station that uses a sub carrier may be referred to as a secondary cell or SCell.

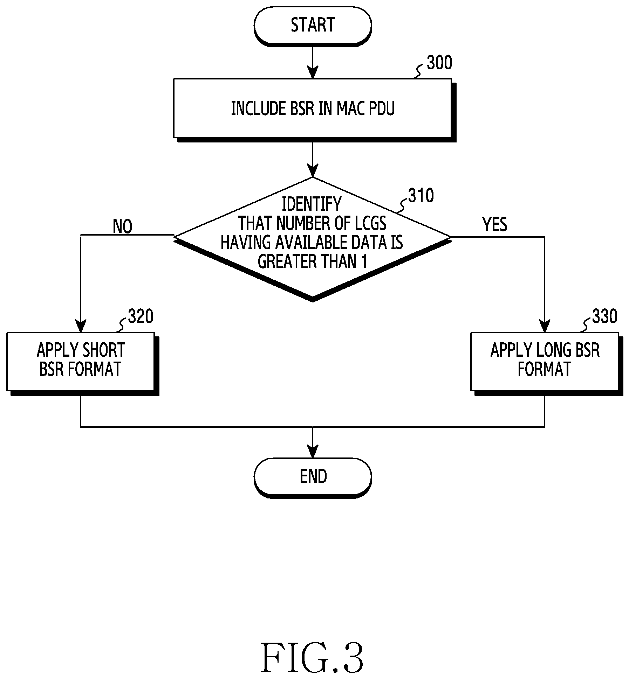

FIG. 3 illustrates a method of determining a buffer status report (BSR) format by a UE in an NR system according to an embodiment of the disclosure. More specifically, FIG. 3 illustrates a method of determining a buffer status report (BSR) format when a UE reports an available uplink data volume (hereinafter referred to as uplink buffer size) to a base station.

Referring to FIG. 3, when the UE includes a BSR in a MAC PUD (operation 300) and transmits the same, the UE may select and transmit one of a long BSR and a short BSR, based on the number of logical channel groups (LCGs) having an uplink buffer size greater than 0 (operation 310). Specifically, when there is more than one LCG having an uplink buffer size greater than 0, the UE may select the long BSR MAC CE (operation 330), and when there is one LCG, the UE may select the short BSR MAC CE (operation 320).

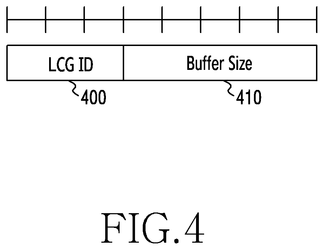

FIG. 4 illustrates a short BSR/short truncated BSR MAC CE format of an NR system according to an embodiment of the disclosure.

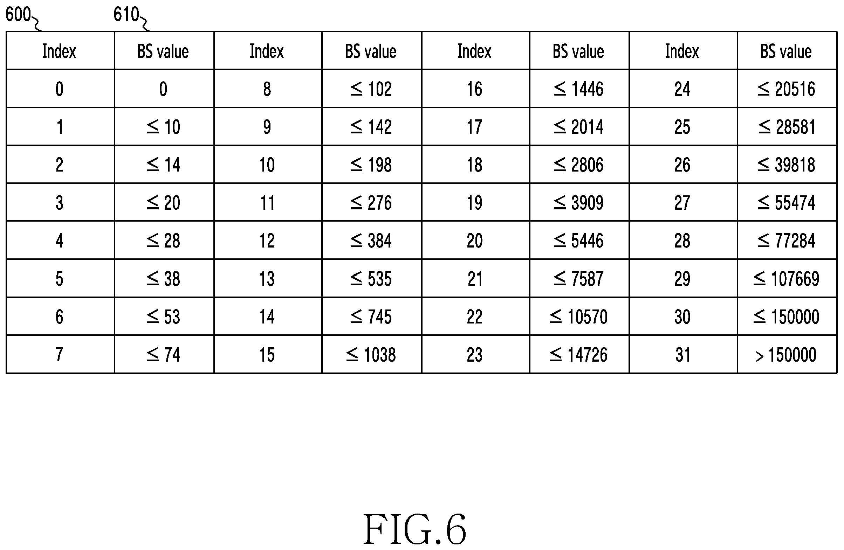

Referring to FIG. 4, the short BSR MAC CE may include a 3-bit LCG ID 400 and a 5-bit buffer size field 410. The LCG ID 400 represents IDs (0 to 7) of the LCG, and the buffer size field 410 indicates a buffer size (BS) index determined by the uplink buffer size corresponding to the LCG ID 400. The BS index has a value between 0 and 31. The BS index may indicate an index of a corresponding interval including an uplink buffer size corresponding to the LCG ID 400 among buffer-size intervals defined in a pre-defined buffer size table (see FIG. 6).

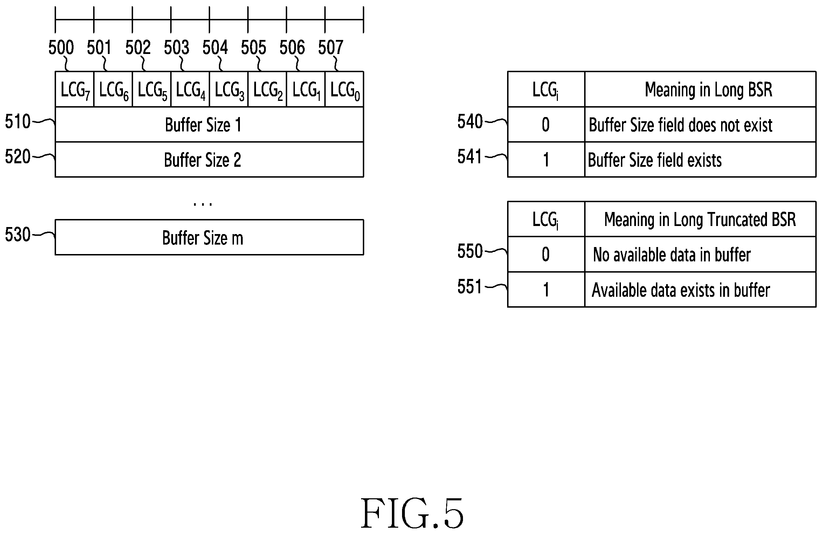

FIG. 5 illustrates a long BSR/long truncated BSR MAC CE format of the NR system according to an embodiment of the disclosure.

Referring to FIG. 5, the long BSR MAC CE may indicate the presence or absence of a buffer size field corresponding to each of the eight LCGs ranging from LCG ID 7 500 to LCG ID 0 507, respectively, as 8 bits of the first byte. When a bit is 0 (indicated by reference numeral 540), it may mean that a buffer size field of the LCG corresponding to the bit of the long BSR MAC CE does not exist. Conversely, when a bit is 1 (indicated by reference numeral 541), it may mean that a buffer size field of the LCG corresponding to the bit of the long BSR MAC CE exists.

Therefore, in the long BSR MAC CE, there may be a buffer size field equal to the number of bit 1s in the first byte. The buffer size fields 510, 520, and 530 of the long BSR MAC CE may have an 8-bit length. The long truncated BSR MAC CE may indicate whether an uplink buffer size of each LCG is greater than 0 (i.e., whether there is available uplink data) for eight LCGs ranging from LCG ID 7 500 to LCG ID 0 507, respectively, as 8 bits of the first byte. When a bit is 0 (indicated by reference numeral 550), it may mean that there is available uplink data in the corresponding LCG, and when a bit is 1 (indicated by reference numeral 551), it may mean that there is no available uplink data in the corresponding LCG.

In the long truncated BSR MAC CE, the number of buffer size fields 510, 520, and 530 may be represented by the L field 750 of the MAC subheader added before the MAC CE, and the buffer size fields 510, 520, and 530 corresponding to the remaining uplink resources may be added to the MAC CE in descending order by considering the priority of the LCGs having available data. Similar to the buffer size field of the short BSR, the buffer size field of the long BSR or the long truncated BSR may indicate the BS index determined by the uplink buffer size.

In the NR system, a long BSR buffer size table for a long BSR may be defined, and an index of a buffer size interval including an uplink buffer size may be indicated through a buffer size field. The buffer size 410 of the short BSR MAC CE has a 5-bit length, whereas the buffer size field of the long BSR or long truncated BSR MAC CE has an 8-bit length. The buffer size table referenced in the long BSR defines a total of 255 BS indexes from 0 to 254, and index 255 is "reserved" and not used. After receiving the BS index, the base station may obtain information on the size of the uplink buffer for each LCG by referring to the buffer size table for the long BSR.

FIG. 6 illustrates a buffer size table for a short BSR defined in NR according to an embodiment of the disclosure.

The buffer size table for a short BSR may define a BS value 610, i.e., a buffer size interval corresponding to each of the 32 BS indexes 600 represented by 0 to 31. For example, if the BS index 600 is 2, it means that the corresponding uplink buffer size has a value between 11 bytes and 14 bytes. After receiving the short BSR MAC CE, the base station may perform uplink resource allocation by referring to an uplink buffer size interval corresponding to the LCG ID 400 and a value of the buffer size field 400.

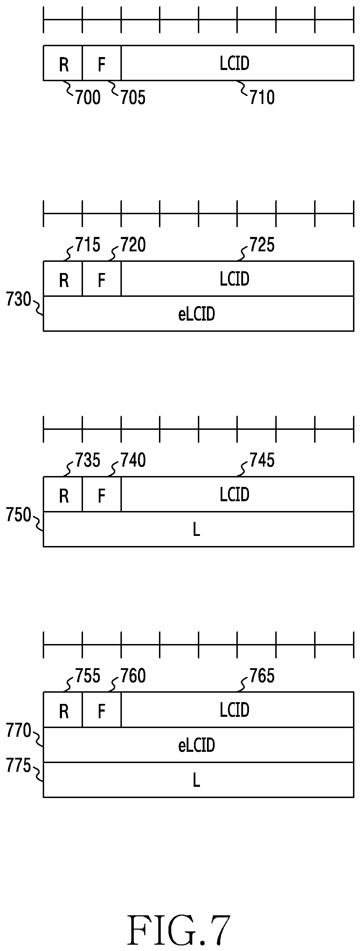

FIG. 7 illustrates a MAC subheader format defined in an NR system according to an embodiment of the disclosure.

Referring to FIG. 7, a 1-byte MAC subheader including fields of R 700, F 705, and LCID 710 may be added before a MAC-CE having a fixed length. In this case, the MAC CE may be indicated by the LCID 710. In addition, according to an embodiment, a 2-byte MAC subheader including fields of R 715, F 720, LCID 725, and eLCID 730 may be added before a MAC CE of a fixed length. At this time, the existence and the length of the eLCID 730 may be indicated by the LCID 725, and the MAC CE may be indicated by the eLCID 730.

According to an embodiment, a 2-byte MAC subheader including fields of R 735, F 740, LCID 745, and L 750 may be added before a MAC CE of a variable length. At this time, the F 740 may indicate whether the length of the L field 750 is 1-byte or 2-byte, and the LCID 750 may indicate a MAC CE. According to an embodiment, a 3-byte MAC subheader including fields of R 755, F 760, LCID 765, eLCID 770, and L 775 may be added before a MAC CE of a variable length. At this time, the F 760 may indicate whether the length of L 775 is 1-byte or 2-byte, the LCID 765 may indicate the existence and length of eLCID 770, and the eLCID 770 may indicate the MAC CE. Since the values of the LCID of the MAC subheader added before the short BSR/short truncated BSR/long BSR/long truncated BSR are different, the base station that has received the BSRs may distinguish a format of the received BSR.

The disclosure provides a method of reporting, to a base station, a data volume satisfying the remaining time threshold by an upper bound, a lower bound, or upper bound and lower bound configuration values of the remaining time of data in an uplink buffer of a UE configured by the base station. Hereinafter, the MAC CE used when a data volume corresponding to the remaining time threshold is reported is referred to as a delay-aware BSR.

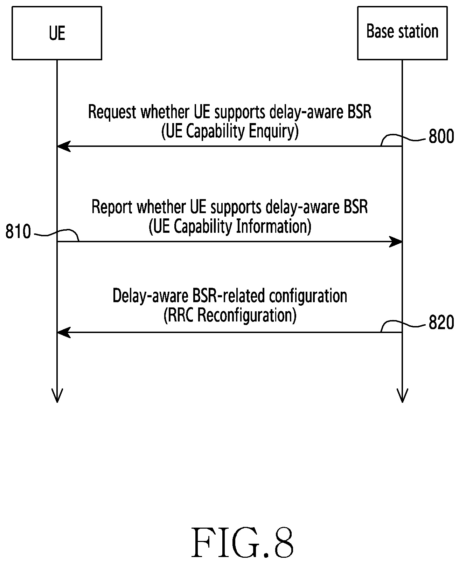

FIG. 8 illustrates a procedure in which a base station and a UE identify whether the UE supports delay-aware BSR and configure a delay-aware BSR-related configuration via RRC signaling according to an embodiment of the disclosure. In other words, a signaling procedure in which the UE and the base station proceed to use the delay-aware-BSR is illustrated.

Referring to FIG. 8, the base station may transmit a UE capability request message (UECapabilityEnquiry) 800 requesting a capability report to a UE in a connected state. The base station may include a UE capability request for each radio access technology (RAT) type in the UECapabilityEnquiry message 800. The UE capability request for each RAT type may include requested frequency band information.

In addition, when the base station requests to generate a UECapabilityInformation message 810 from the UE through the UECapabilityEnquiry message 800, the base station may include filtering information capable of indicating a condition and a restriction. At this time, through filtering information, the base station may indicate whether to report whether the UE supports the delay-aware BSR. The UE may configure a UECapabilityInformation message 810 corresponding to the UECapabilityEnquiry message 800 and report a response to the UECapabilityEnquiry message 800 to the base station. At this time, the UECapabilityInformation message 810 may include a parameter indicating whether the UE supports the delay-aware BSR.

As an example, a parameter may be 1 bit information. In addition, as an example, when a parameter is included, it may indicate that the UE supports the delay-aware BSR, and when a parameter is not included, it may indicate that the UE does not support the delay-aware BSR. The base station may determine whether the UE supports the delay-aware BSR, based on the received UECapabilityInformation message 810.

When it is determined that the UE supports the delay-aware L1-BSR, the base station may indicate the delay-aware BSR-related configuration by including the same in an RRCReconfiguration message 820. The UE may apply the delay-aware BSR-related configuration information included in the received RRCReconfiguration message 820.

More specifically, for the delay-aware BSR-related configuration, the RRCReconfiguration message 820 may include at least one of the following information. Of course, this is not limited to the examples below.
- An LCG list (including only one LCG) capable of reporting a delay-aware buffer size through a delay-aware BSR may be included. In an embodiment, the LCG included in the LCG list may include only an LCH capable of reporting the delay-aware buffer size. In another embodiment, the LCG included in the LCG list may include both an LCH capable of reporting a delay-aware buffer size and an LCH that cannot be reported. Hereinafter, an LCG capable of reporting a delay-aware buffer size through a delay-aware BSR is referred to as a delay-aware LCG.
- A DRB list (including only one DRB) capable of reporting a delay-aware buffer size through a delay-aware BSR may be included. In an embodiment, the LCH connected to the DRB included in the DRB list may report the delay-aware buffer size through the delay-aware BSR. Hereinafter, a DRB capable of reporting a delay-aware buffer size is referred to as a delay-aware DRB.
- An LCH list (including only one LCH) capable of reporting delay-aware buffer size through the delay-aware BSR may be included. Hereinafter, the LCH capable of reporting the delay-aware buffer size through the delay-aware BSR is referred to as a delay-aware LCH.
- A serving cell list (including only one serving cell) capable of reporting delay-aware buffer size through the delay-aware BSR may be included. In an embodiment, only the MAC PDU transmitted from a serving cell included in the serving cell list may be configured to include a delay-aware BSR MAC CE.
- A cell group list (including only one cell group) capable of reporting a delay-aware buffer size through the delay-aware BSR may be included. In an embodiment, only the MAC PDU transmitted from a cell group included in the cell group list may be configured to include a delay-aware BSR MAC CE. In an embodiment, it may be configured to report the delay-aware buffer size to all LCGs and LCHs of the cell group included in the cell group list.
- A remaining time lower bound of uplink data to be reported through the delay-aware BSR may be included. The lower bound may be configured for each LCH, LCG, cell group, or UE. In an embodiment, when the remaining time lower bound is configured for each LCG, the corresponding lower bound may be applied equally to all delay-aware LCHs belonging to the configured LCG. In an embodiment, when the remaining time lower bound is configured for each LCG, the corresponding lower bound may be applied equally to all delay-aware LCHs belonging to the configured LCG. In an embodiment, when the remaining time lower bound is configured for each cell group, the corresponding lower bound may be applied equally to all delay-aware LCHs belonging to the configured cell group. In an embodiment, when the remaining time lower bound is configured for each UE, the lower bound may be equally applied to all delay-aware LCHs of the corresponding UE.
- A remaining time upper bound of uplink data to be reported through the delay-aware BSR may be included. The upper bound may be configured for each LCH, LCG, cell group, or UE. In an embodiment, when the remaining time upper bound is configured for each LCG, the corresponding upper bound may be applied equally to all delay-aware LCHs belonging to the configured LCG. In an embodiment, when the remaining time upper bound is configured for each LCG, the corresponding upper bound may be applied equally to all delay-aware LCHs belonging to the configured LCG. In an embodiment, when the remaining time upper bound is configured for each cell group, the corresponding upper bound may be applied equally to all delay-aware LCHs belonging to the configured cell group. In an embodiment, when the remaining time upper bound is configured for each UE, the upper bound may be applied equally to all delay-aware LCHs of the corresponding UE.

In case that the delay-aware BSR-related configuration information included in the RRCReconfiguration message 820 has already been configured, the UE that has received the RRCReconfiguration message 820 may update the already configured information with the information included in the RRCReconfiguration message 820.

In an embodiment, the delay-aware LCG may include an LCG included in the LCG list indicated by RRCReconfiguration.

In an embodiment, the delay-aware LCH may include an LCH included in the LCH list indicated by RRCReconfiguration.

In an embodiment, the delay-aware LCH may include an LCH connected to a DRB included in the DRB list indicated by RRCReconfiguration.

In an embodiment, the delay-aware LCG or delay-aware LCH may include an LCG or LCH to which the remaining time upper bound or lower bound is configured or applied.

In an embodiment of the disclosure, the UE reports the data size that satisfies the configured remaining time threshold (requirement) to the base station by using the delay-aware buffer size field, which is expressed in units of LCGs or LCHs and is included in the delay-aware BSR.

In an embodiment of the disclosure, the short delay-aware BSR may include only one delay-aware buffer size field. In an embodiment, the long delay-aware BSR may include one or more delay-aware buffer size fields. In the disclosure, the order of each of the fields in the format of the short delay-aware BSR MAC CE and the long delay-aware BSR MAC CE is not limited. In the disclosure, the length of each of the fields in the format of the short delay-aware BSR MAC CE and the long delay-aware BSR MAC CE is not limited.

In an embodiment of the disclosure, when the UE reports the delay-aware buffer size in units of LCGs, the size of the data satisfying the remaining time threshold among the data stored in the uplink buffer of a specific LCG may be determined by adding the sizes of the data satisfying the remaining time threshold of the corresponding delay-aware LCH among the data stored in the uplink buffer of each delay-aware LCH belonging to the corresponding LCG.

In an embodiment, when the buffer size field included in the delay-aware BSR is configured in units of LCGs, the buffer size field of a specific LCG may indicate the following information.
- Based on the total sum of the sizes of the data stored in the uplink buffer of each LCH belonging to the corresponding LCG, the buffer size field may indicate the index of the interval containing the corresponding size in the buffer size table.
- Based on a value obtained by subtracting the size of data satisfying the remaining time threshold among the data stored in the uplink buffer of each delay-aware LCH belonging to the corresponding LCG from the total sum of the sizes of the data stored in the uplink buffer of each LCH belonging to the corresponding LCG, the buffer size field may indicate the index of the interval containing the corresponding size in the buffer size table.
- Based on a value obtained by subtracting the size of data satisfying the remaining time threshold among the data stored in the uplink buffer of each delay-aware LCH belonging to the corresponding LCG from the total sum of the sizes of the data stored in the uplink buffer of each LCH belonging to the corresponding LCG, and by subtracting therefrom the data size that is less than (or less than or equal to) the lower bound among the data stored in the uplink buffer of the delay-aware LCH for which the remaining time lower bound is configured, the buffer size field may indicate the index of the interval containing the corresponding size in the buffer size table.

In an embodiment, when the delay-aware buffer size included in the delay-aware BSR is reported in units of LCGs, the delay-aware buffer size field may indicate the index of the interval containing the corresponding size in the buffer size table, based on the sum of the sizes of data satisfying the remaining time threshold among the data stored in the uplink buffer of each delay-aware LCH belonging to the corresponding LCG.

In an embodiment, when the delay-aware buffer size included in the delay-aware BSR is reported in units of LCH, the delay-aware buffer size field may indicate the index of the interval containing the corresponding size in the buffer size table, based on the size of data satisfying the remaining time threshold among the data stored in the uplink buffer of each delay-aware LCH belonging to the corresponding LCG.

In an embodiment, the data size that satisfies the remaining time threshold of a specific LCH may be determined as follows.
- In case that both the remaining time lower bound and upper bound of the corresponding LCH are configured, the data size may correspond to the size of data having the remaining time greater than (or greater than or equal to) the lower bound and less than (or less than or equal to) the upper bound, among the data stored in the uplink buffer of the corresponding LCH.
- In case that only the remaining time lower bound of the corresponding LCH is configured and the upper bound is not configured, the data size may correspond to the size of data having the remaining time greater than (or greater than or equal to) the remaining time lower bound, among the data stored in the uplink buffer of the corresponding LCH.
- In case that only the remaining time upper bound of the corresponding LCH is configured and the lower bound is not configured, the data size may correspond to the size of data having the remaining time less than (or less than or equal to) the upper bound, among the data stored in the uplink buffer of the corresponding LCH.
- In case that neither the remaining time upper bound nor lower bound of the corresponding LCH is configured, the data size may correspond to the size of data stored in the uplink buffer of the corresponding LCH.

In an embodiment of the disclosure, the remaining time of uplink data reported through the delay-aware BSR may indicate that uplink data transmission is no longer required after the corresponding time.

In an embodiment of the disclosure, the remaining time measurement criterion for uplink data reported through the delay-aware BSR may be as follows:
- The remaining time may be measured based on the time of configuring a delay-aware BSR MAC CE.
- The remaining time may be measured based on an initial transmission time of the MAC PDU including the delay-aware BSR MAC CE.
- The remaining time may be measured based on a time when a UL Grant required to transmit the MAC PDU including the delay-aware BSR MAC CE is received.
- The remaining time may be the same as the remaining time for the PDCP discardTimer of the data at the time of the remaining time calculation. In addition, the remaining time may be calculated by subtracting a specific fixed value from the remaining time of PDCP discardTimer at the time of the remaining time calculation. The fixed value may be predefined or a value configured by the base station through an RRC message.

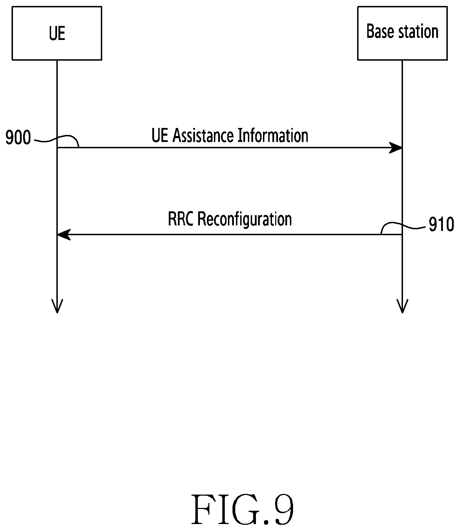

FIG. 9 illustrates a procedure in which a UE reports a preferred delay-aware BSR-related configuration to a base station through a UEAssistanceInformation (UAI) message 900, and a procedure in which a base station reconfigures a delay-aware BSR-related configuration of a UE through an RRC message, according to an embodiment of the disclosure.

Referring to FIG. 9, at the time of transmission of a UEAssistanceInformation message 900 to the base station, the UE may include preferred configuration information related to a delay-aware BSR, as shown below.
- The UE may include a preferred remaining time lower bound. The lower bound may be larger or smaller than the previously configured lower bound. For example, in case that the remaining time lower bound configured by the base station is too large, the UE may not be able to report the size of most uplink data through the delay-aware BSR because the remaining time for the data is smaller than the lower bound. At this time, the UE may include a lower bound smaller than the existing one in order to request a downward adjustment of the remaining time lower bound.
- The UE may include a preferred remaining time upper bound. The upper bound may be larger or smaller than the previously configured upper bound. For example, in case that the remaining time upper bound configured by the base station is too small, the UE may not be able to report the size of most uplink data through the delay-aware BSR because the remaining time for the data is larger than the upper bound. At this time, the UE may include a larger upper bound in order to request an upward adjustment of the remaining time upper bound.

In addition, the configuration information preferred by the UE in relation to the aforementioned delay-aware BSR may be included in the UEAssistanceInformation message 900 for each UE, cell group, delay-aware LCG, delay-aware LCH, or delay-aware DRB.

Referring to FIG. 9, after receiving the UEAssistanceInformation message 900 transmitted by the UE, the base station may reconfigure the delay-aware BSR-related configuration of the UE through the RRCReconfiguration message 910.

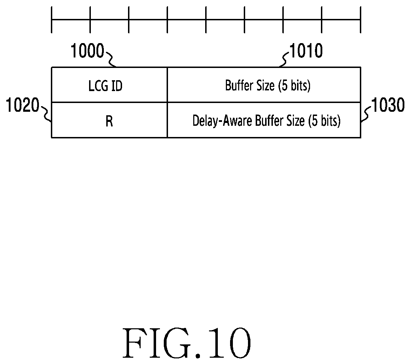

FIG. 10 illustrates a short delay-aware BSR MAC CE format according to an embodiment of the disclosure.

Referring to FIG. 10, 3 bits of the first byte of a short delay-aware BSR MAC CE may indicate an LCG ID 1000. The LCG ID 1000 may indicate an LCG corresponding to an uplink buffer size to be reported to the short delay-aware BSR MAC CE. The LCG ID 1000 may indicate one LCG ranging from LCG ID 0 to LCG ID 7. The remaining 5 bits of the first byte of the short delay-aware BSR MAC CE, excluding 3 bits for LCG ID, may indicate a buffer size field 1010.

The 3 bits of the second byte of the short delay-aware BSR MAC CE may be used as a reserved field 1020. The remaining 5 bits excluding the reserved field 1020 may indicate the delay-aware buffer size field 1030.

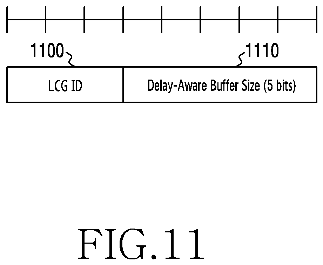

FIG. 11 illustrates a short delay-aware BSR MAC CE format according to another embodiment of the disclosure.

Referring to FIG. 11, 3 bits of the first byte of a short delay-aware BSR MAC CE may indicate an LCG ID 1100. The LCG ID 1100 may indicate an LCG corresponding to an uplink buffer size to be reported to the short delay-aware BSR MAC CE. The LCG ID 1100 may indicate one LCG ranging from LCG ID 0 to LCG ID 7. The remaining 5 bits of the first byte of the short delay-aware BSR MAC CE, excluding 3 bits for LCG ID, may indicate a buffer size field 1110.

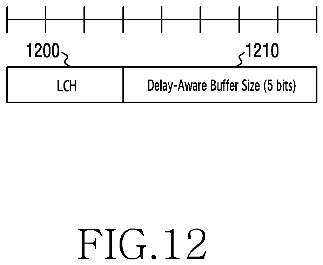

FIG. 12 illustrates a short delay-aware BSR MAC CE format according to yet another embodiment of the disclosure.

Referring to FIG. 12, 3 bits 1200 of the first byte of a short delay-aware BSR MAC CE may indicate an LCH ID or LCH index.
- In the case of an LCH ID, the LCH ID may be indicated.
- In the case of an LCH index, the LCH index may indicate the sequential position of the LCH among the generated LCHs in ascending or descending order based on the LCH ID, or in ascending or descending order based on the LCH priority. In another example, in the case of an LCH index, the LCH index may indicate the sequential position of the LCH among the configured delay-aware LCHs in ascending or descending order based on the LCH ID, or in ascending or descending order based on the LCH priority.

The remaining 5 bits of the first byte of the short delay-aware BSR MAC CE, excluding the LCH field 1200 may be used to indicate a delay-aware buffer size field 1210.

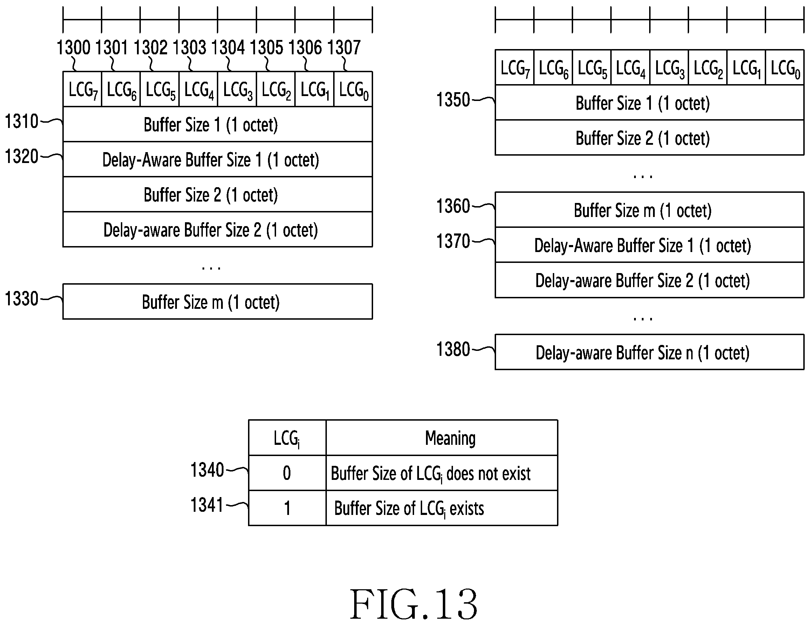

FIG. 13 illustrates a long delay-aware BSR MAC CE format according to another embodiment of the disclosure.

Referring to FIG. 13, the 8 bits 1300, 1301, 1302, 1303, 1304, 1305, 1306, and 1307 of the first byte of a long delay-aware BSR MAC CE may be interpreted as a bitmap in which the 8 bits correspond to eight LCGs ranging from LCG ID 7 to LCG ID 0, respectively. In case that a specific bit of the 8 bits is configured as 1, it may indicate that there is a buffer size field of an LCG corresponding to a bit configured as 1 in the long delay-aware BSR MAC CE. Additionally, in case that a specific bit of the 8 bits is configured as 0, it may indicate that there is no buffer size field of an LCG corresponding to a bit configured as 0 in the long delay-aware BSR MAC CE. In addition, the meanings of 1 and 0 of the bit may be interchangeable, and the mapping relationship is not limited in the disclosure.

According to an embodiment, the remaining bytes of the long delay-aware BSR MAC CE, except the first byte, may be configured by buffer size fields 1310 and 1330 corresponding to one or multiple LCGs. The buffer size field may exist for each of the LCGs configured as 1 in the LCG ID bitmap.

In an embodiment of the disclosure, in the remaining bytes of the long delay-aware BSR MAC CE, excluding the first byte, when a specific LCG having available data is a delay-aware LCG, the delay-aware buffer size field of the LCG may also be included immediately after the buffer size field of the LCG.

In an embodiment of the disclosure, in the remaining bytes of the long delay-aware BSR MAC CE, except the first byte, all the buffer size fields 1350 to 1360 of the LCG having available data are first placed, and then the delay-aware buffer size fields 1370 to 1380 of the delay-aware LCG having available data may be placed.

The criteria for configuring the bit corresponding to a specific LCG in the LCG bitmap to 1 and including the buffer size field and delay-aware buffer size field of the LCG in the long delay-aware BSR may be as follows:
- when the size of data stored in the uplink buffer of the corresponding LCG is greater than 0
- when the size of data satisfying the configured remaining time threshold among the data stored in the uplink buffer of the corresponding LCG is greater than 0
- when the size of the data stored in the uplink buffer of the corresponding LCG is greater than 0, or the size of data satisfying the configured remaining time threshold among the data stored in the uplink buffer of the corresponding LCG is greater than 0

The buffer size field or delay-aware buffer size field for each LCG may be arranged in ascending or descending order based on the LCG ID. The buffer size field or delay-aware buffer size field for each LCG may be arranged in ascending or descending order based on the priority of the LCG.

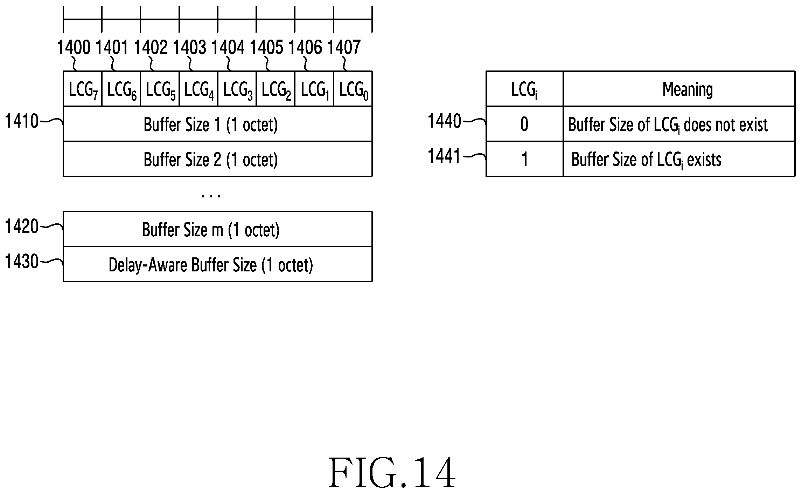

FIG. 14 illustrates a long delay-aware BSR MAC CE format according to another embodiment of the disclosure.

Referring to FIG. 14, the 8 bits 1400, 1401, 1402, 1403, 1404, 1405, 1406, and 1407 of the first byte of a long delay-aware BSR MAC CE may be interpreted as a bitmap in which the 8 bits correspond to eight LCGs ranging from LCG ID 7 to LCG ID 0, respectively. In case that a specific bit of the 8 bits is configured as 1, it may indicate that there is a buffer size field for reporting the uplink buffer size of an LCG corresponding to a bit configured as 1. Additionally, in case that a specific bit of the 8 bits is configured as 0, it may indicate that there is no buffer size field for reporting the uplink buffer size of an LCG corresponding to a bit configured as 0.

According to an embodiment, the remaining bytes of the long delay-aware BSR MAC CE, except the first byte, may be configured by buffer size fields 1410 and 1420 corresponding to one or multiple LCGs. The buffer size field may exist for each of the LCGs configured as 1 in the LCG ID bitmap.

According to an embodiment, all the buffer size fields of the LCG having available data are arranged, and then one delay-aware buffer size field 1430 may be added. The delay-aware buffer size field may indicate the index of the interval containing the corresponding size in the buffer size table, based on the sum of the sizes of all data that satisfies the remaining time requirements among the data stored in the uplink buffer of each delay-aware LCH.

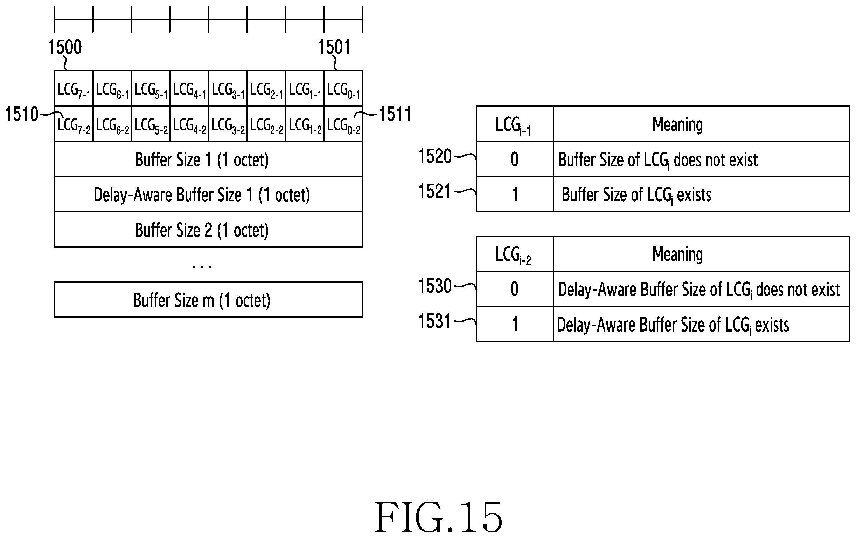

FIG. 15 illustrates a long delay-aware BSR MAC CE format according to yet another embodiment of the disclosure.

Referring to FIG. 15, the 8 bits 1500 to 1501 of a specific byte of a long delay-aware BSR MAC CE may be interpreted as a bitmap in which the 8 bits correspond to 8 LCGs ranging from LCG ID 7 to LCG ID 0, respectively. In case that a specific bit of the 8 bits is configured as 1 (indicated by reference numeral 1551), it may indicate that there is a buffer size field of an LCG corresponding to a bit configured as 1. Additionally, in case that a specific bit of the 8 bits is configured as 0 (indicated by reference numeral 1550), it may indicate that there is no buffer size field for reporting the uplink buffer size of an LCG corresponding to a bit configured as 0.

Referring to FIG. 15, the 8 bits 1510 to 1511 of a specific byte of the long delay-aware BSR MAC CE may be interpreted as a bitmap in which the 8 bits correspond to eight LCGs ranging from LCG ID 7 to LCG ID 0, respectively. In case that a specific bit of the 8 bits is configured as 1 (indicated by reference numeral 1561), it may indicate that there is a delay-aware buffer size field of an LCG corresponding to a bit configured as 1. Additionally, in case that a specific bit of the 8 bits is configured as 0 (indicated by reference numeral 1560), it may indicate that a delay-aware buffer size field of an LCG corresponding to a bit configured as 0 does not exist.

The disclosure does not limit the order between the bitmap indicating the presence or absence of the delay-aware buffer size field and the bitmap indicating the presence or absence of the buffer size field.

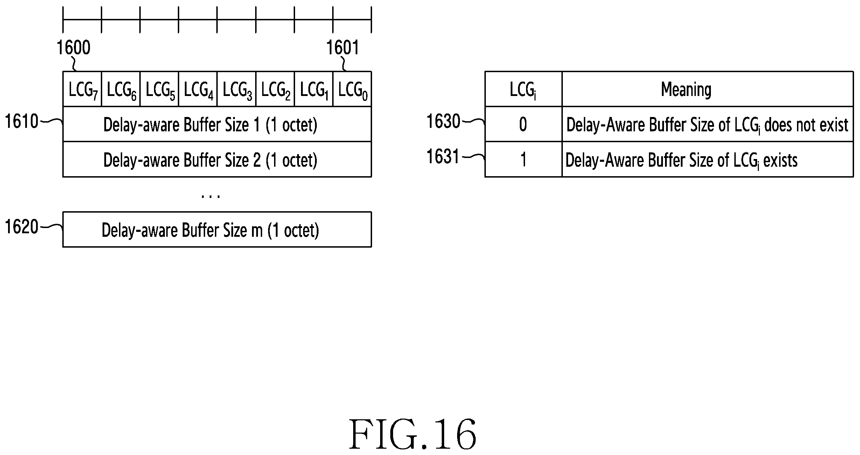

FIG. 16 illustrates a long delay-aware BSR MAC CE format according to still another embodiment of the disclosure.

Referring to FIG. 16, in an embodiment, the long delay-aware BSR MAC CE may include delay-aware buffer size fields for each of one or more delay-aware LCGs. In an embodiment, 8 bits 1600 to 1601 of the first byte of the long delay-aware BSR MAC CE may be interpreted as a bitmap in which the 8 bits correspond to eight LCGs ranging from LCG ID 7 to LCG ID 0, respectively. In case that a specific bit of the 8 bits is configured as 1 (indicated by reference numeral 1631), it may indicate that a delay-aware buffer size field of an LCG corresponding to a bit configured as 1 exists. Additionally, in case that a specific bit of the 8 bits is configured as 0 (indicated by reference numeral 1630), it may indicate that a delay-aware buffer size field of an LCG corresponding to a bit configured as 0 does not exist. The absence of the delay-aware buffer size field may indicate that there is no data in the delay-aware LCG that satisfies the remaining time requirements when measuring the remaining time.

Referring to FIG. 16, the remaining part except for the first byte of the long delay-aware BSR MAC CE may be configured by delay-aware buffer size fields of an LCG corresponding to a bit configured as 1 in the bitmap.

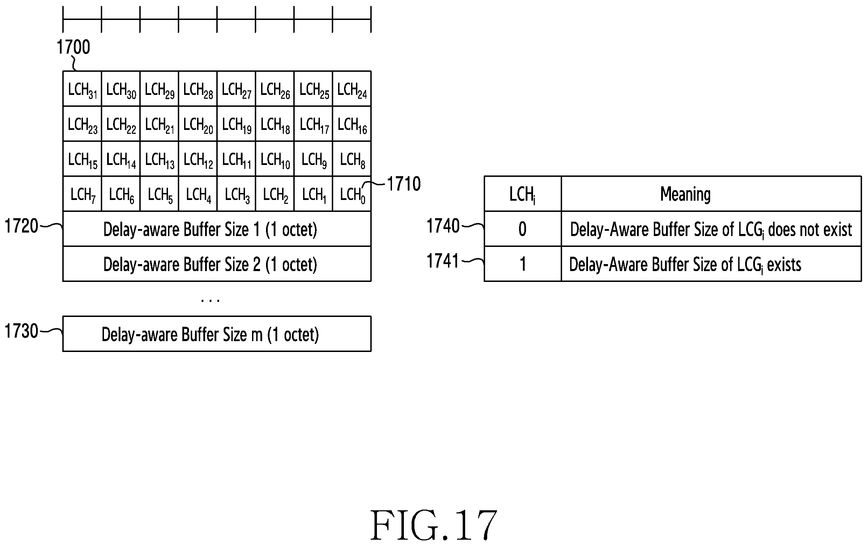

FIG. 17 illustrates a long delay-aware BSR MAC CE format according to still yet another embodiment of the disclosure.

Referring to FIG. 17, in an embodiment, the long delay-aware BSR MAC CE may include delay-aware buffer size fields for each of one more delay-aware LCHs. In an embodiment, the 32 bits 1700 to 1710 of the first four bytes of the long delay-aware BSR MAC CE may be interpreted as a bitmap in which the 32 bits correspond to 32 LCHs from LCH 31 to LCH 0, respectively. In case that a specific bit of the 32 bits is configured as 1 (indicated by reference numeral 1741), it may indicate that a delay-aware buffer size field of a delay-aware LCH corresponding to a bit configured as 1 exists. Additionally, in case that a specific bit of the 32 bits is configured as 0 (indicated by reference numeral 1740), it may indicate that a delay-aware buffer size field of a delay-aware LCH corresponding to a bit configured as 0 does not exist. In case that the delay-aware buffer size field does not exist may indicate that there is no data in the corresponding delay-aware LCH that satisfies the remaining time requirements when measuring the remaining time.

Referring to FIG. 17, the remaining part of the long delay-aware BSR MAC CE, except for the first four bytes, may be configured by delay-aware buffer size fields of a delay-aware LCH corresponding to a bit configured as 1 in the bitmap.

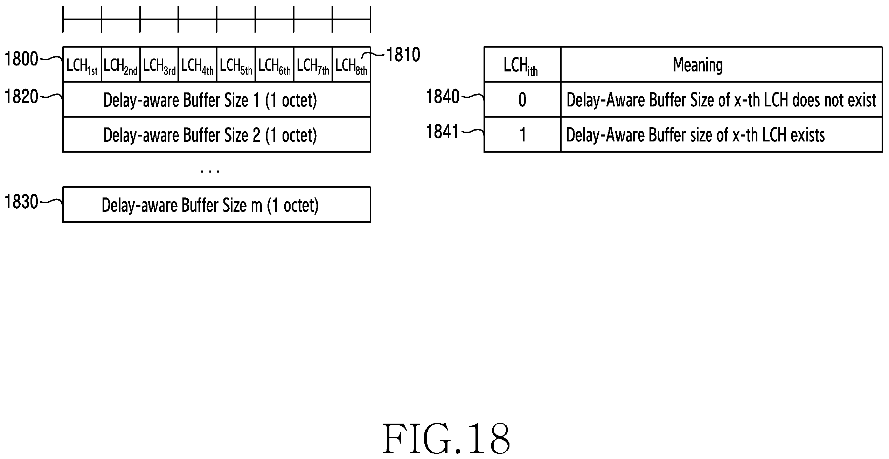

FIG. 18 illustrates a long delay-aware BSR MAC CE format according to further another embodiment of the disclosure.

Referring to FIG. 18, in an embodiment, the long delay-aware BSR MAC CE may include delay-aware buffer size fields for each of one or more delay-aware LCHs. In an embodiment, the 8 bits 1800 to 1810 of the first byte of the long delay-aware BSR MAC CE may be interpreted as a bitmap in which the 8 bits correspond to the 1^{st} LCH to the 8^{th} LCH, respectively. In case that a specific bit of the 8 bits is configured as 1 (indicated by reference numeral 1841), it may indicate that a delay-aware buffer size field of the i-th LCH corresponding to a bit configured as 1 exists. Additionally, in case that a specific bit of the 8 bits is configured as 0 (indicated by reference numeral 1840), it may indicate that a delay-aware buffer size field of the i-th LCH corresponding to a bit configured as 0 does not exist. In the disclosure, the length of LCH Bimap is not limited.

In an embodiment, the i-th LCH may refer to the i-th LCH among the configured LCHs, in ascending or descending order based on the LCH ID or LCH priority. In an embodiment, the i-th LCH may refer to the i-th LCH among the remaining LCHs excluding the LCH mapped to an SRB among the configured LCHs, in ascending or descending order based on the LCH ID or LCH priority. In an embodiment, the i-th LCH may refer to the i-th LCH among the configured delay-aware LCHs, in ascending or descending order based on the LCH ID or LCH priority. In an embodiment, the i-th LCH may refer to the i-th LCH among the remaining LCHs excluding the LCH mapped to the SRB among the configured delay-aware LCHs, in ascending or descending order based on the LCH ID or LCH priority.

Referring to FIG. 18, the remaining part except for the LCH bitmap of the long delay-aware BSR MAC CE may be configured by the delay-aware buffer size fields of a delay-aware LCH corresponding to a bit configured as 1 in the bitmap.

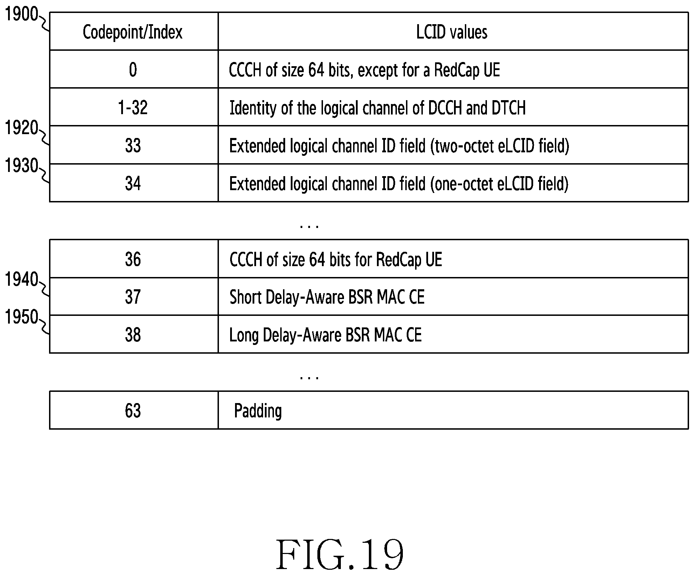

FIG. 19 illustrates an example of allocating a new LCID for a new MAC CE proposed in the disclosure according to an embodiment of the disclosure.

Referring to FIG. 19, two reserved values (e.g., codepoint 37 and codepoint 38) among the LCID codepoints used in the NR system may be allocated to a short delay-aware BSR MAC CE 1940 and a long delay-aware BSR MAC CE 1950, respectively. At this time, since the short delay-aware BSR MAC CE 1940 may have a fixed length, a MAC subheader including fields of the R 700, F 705, and LCID 710 may be added thereto as described in FIG.7, and the corresponding codepoint may be indicated using the LCID 710.

Since the long delay-aware BSR MAC CE 2050 may be of variable length, a MAC subheader including fields of the R 735, F 740, LCID 745, and L 750 may be added thereto as described in FIG. 7. At this time, the codepoint of the corresponding MAC CE may be indicated by the LCID 745, and the length of the corresponding MAC CE may be indicated by the L 750.

The codepoint value in FIG. 19 is not necessarily limited to a specific value. This is an example and is not limited to the value shown in FIG. 19. In addition, the disclosure is characterized in that the short delay-aware BSR MAC CE and the long delay-aware BSR MAC CE are indicated by a specific codepoint/index.

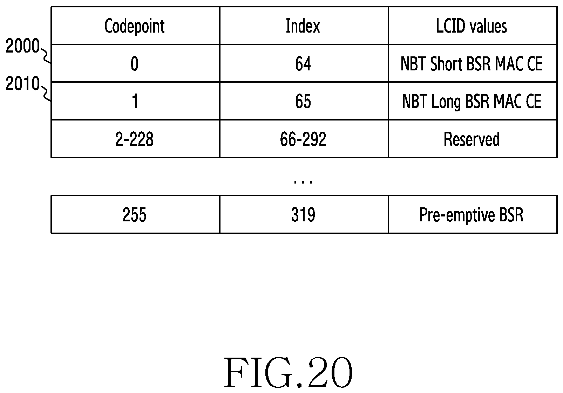

FIG. 20 illustrates an example of allocating a new eLCID to a newly defined MAC CE according to another embodiment of the disclosure.

Referring to FIG. 20, two reserved values (e.g., codepoint 0 and codepoint 1) among the LCID codepoints used in the NR system may be allocated to a short delay-aware BSR MAC CE 2000 and a long delay-aware BSR MAC CE 2010, respectively. At this time, since the short delay-aware BSR MAC CE 2000 may have a fixed length, a MAC subheader including fields of the R 715, F 720, LCID 725, and eLCID 730 may be added thereto as described in FIG.7. At this time, the existence and length of the eLCID 730 may be indicated by the LCID 725, and the codepoint corresponding to the MAC CE may be indicated by the eLCID 730.

Since the long delay-aware BSR MAC CE 2010 may be of variable length, a MAC subheader including fields of the R 755, F 760, LCID 765, eLCID 770, and L 775 may be added thereto as described in FIG. 7. At this time, the codepoint corresponding to the MAC CE may be indicated by the eLCID 770, and the length of the corresponding MAC CE may be indicated by the L 775.

As shown in FIG. 20, the relationship between the codepoint, the index, and the LCID may be indicated. Meanwhile, the codepoint value is not necessarily limited to the index value and LCID information shown in FIG. 20, and this is merely an example. The disclosure is characterized in that a specific codepoint matches a specific index, and that the specific codepoint and index indicate the short delay-aware BSR MAC CE and the long delay-aware BSR MAC CE.

In an example of the disclosure, the logical channel priority of the delay-aware BSR MAC CE may be defined in the following order. Of course, this is not limited to the examples below.
- MAC CE for C-RNTI, or data from UL-CCCH;
- MAC CE for (Enhanced) BFR, or MAC CE for Configured Grant Confirmation, or MAC CE for Multiple Entry Configured Grant Confirmation;
- MAC CE for Sidelink Configured Grant Confirmation;
- MAC CE for LBT failure;
- MAC CE for Timing Advance Report;
- MAC CE for SL-BSR prioritized according to clause 5.22.1.6;
- MAC CE for (Extended) BSR, with exception of BSR included for padding;
- MAC CE for (Enhanced) Single Entry PHR, or MAC CE for (Enhanced) Multiple Entry PHR;
- MAC CE for Positioning Measurement Gap Activation/Deactivation Request;
- MAC CE for the number of Desired Guard Symbols;
- MAC CE for Case-6 Timing Request;
- MAC CE for (Extended) Pre-emptive BSR;
- MAC CE for SL-BSR, with exception of SL-BSR prioritized according to clause 5.22.1.6 and SL-BSR included for padding;
- MAC CE for IAB-MT Recommended Beam Indication, or MAC CE for Desired IAB-MT PSD range, or MAC CE for Desired DL Tx Power Adjustment;
- data from any Logical Channel, except data from UL-CCCH;
- MAC CE for delay-aware BSR, with exception of included for padding;
- MAC CE for Recommended bit rate query;
- MAC CE for BSR included for padding;
- MAC CE for SL-BSR included for padding.

The delay-aware BSR may have a logical channel priority lower than data from any logical channel, except data from UL-CCCH. By configuring the priority of the delay-aware BSR MAC CE lower than that of the data, there may be cases where it is more reasonable to prioritize data transmission over the delay-aware BSR MAC CE, which indicates the presence of data, when uplink resources are insufficient to transmit both the delay-aware BSR MAC CE and the data.

According to an embodiment of the disclosure, the logical channel priority of the delay-aware BSR MAC CE may be the same as the MAC CE for (Extended) BSR, with exception of BSR included for padding.

According to an embodiment of the disclosure, the logical channel priority of the delay-aware BSR may be defined in the following order. Of course, this is not limited to the examples below.
- MAC CE for C-RNTI, or data from UL-CCCH;
- MAC CE for (Enhanced) BFR, or MAC CE for Configured Grant Confirmation, or MAC CE for Multiple Entry Configured Grant Confirmation;
- MAC CE for Sidelink Configured Grant Confirmation;
- MAC CE for LBT failure;
- MAC CE for Timing Advance Report;
- MAC CE for delay-aware BSR, with exception of included for padding;
- MAC CE for SL-BSR prioritized according to clause 5.22.1.6;
- MAC CE for (Extended) BSR, with exception of BSR included for padding;
- MAC CE for (Enhanced) Single Entry PHR, or MAC CE for (Enhanced) Multiple Entry PHR;
- MAC CE for Positioning Measurement Gap Activation/Deactivation Request;
- MAC CE for the number of Desired Guard Symbols;
- MAC CE for Case-6 Timing Request;
- MAC CE for (Extended) Pre-emptive BSR;
- MAC CE for SL-BSR, with exception of SL-BSR prioritized according to clause 5.22.1.6 and SL-BSR included for padding;
- MAC CE for IAB-MT Recommended Beam Indication, or MAC CE for Desired IAB-MT PSD range, or MAC CE for Desired DL Tx Power Adjustment;
- data from any Logical Channel, except data from UL-CCCH;
- MAC CE for Recommended bit rate query;
- MAC CE for BSR included for padding;
- MAC CE for SL-BSR included for padding.

Since the delay-aware BSR may be used in a situation where there is little remaining time and it is necessary to quickly notify the base station of the existence of the data. Therefore, the delay-aware BSR MAC CE may have the highest priority among the BSR-related MAC CEs.

According to an embodiment of the disclosure, the logical channel priority of the delay-aware BSR may be defined in the following order. Of course, this is not limited to the examples below.
- MAC CE for C-RNTI, or data from UL-CCCH;
- MAC CE for (Enhanced) BFR, or MAC CE for Configured Grant Confirmation, or MAC CE for Multiple Entry Configured Grant Confirmation;
- MAC CE for Sidelink Configured Grant Confirmation;
- MAC CE for LBT failure;
- MAC CE for Timing Advance Report;
- MAC CE for SL-BSR prioritized according to clause 5.22.1.6;
- MAC CE for (Extended) BSR, with exception of BSR included for padding;
- MAC CE for delay-aware BSR, with exception of included for padding;
- MAC CE for (Enhanced) Single Entry PHR, or MAC CE for (Enhanced) Multiple Entry PHR;
- MAC CE for Positioning Measurement Gap Activation/Deactivation Request;
- MAC CE for the number of Desired Guard Symbols;
- MAC CE for Case-6 Timing Request;
- MAC CE for (Extended) Pre-emptive BSR;
- MAC CE for SL-BSR, with exception of SL-BSR prioritized according to clause 5.22.1.6 and SL-BSR included for padding;
- MAC CE for IAB-MT Recommended Beam Indication, or MAC CE for Desired IAB-MT PSD range, or MAC CE for Desired DL Tx Power Adjustment;
- data from any Logical Channel, except data from UL-CCCH;
- MAC CE for Recommended bit rate query;
- MAC CE for BSR included for padding;
- MAC CE for SL-BSR included for padding.

According to an embodiment of the disclosure, the delay-aware BSR and the BSR may be included simultaneously in the same MAC PDU in a complementary manner. Since the delay-aware BSR and the BSR may be used in a complementary manner, it is possible to maintain the existing operation method using only the BSR when uplink resources are not sufficient. Therefore, the delay-aware BSR MAC CE may have the lowest priority among the BSR-related MAC CEs.

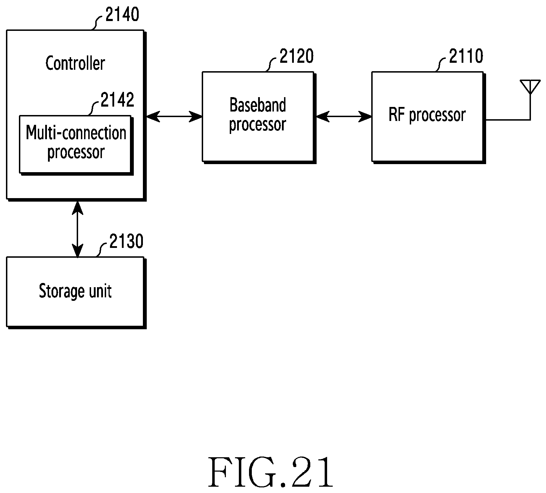

FIG. 21 is a block diagram illustrating an internal structure of a UE according to an embodiment of the disclosure.

Referring to FIG. 21, the UE may include a radio frequency (RF) processor2110, a baseband processor 2120, a storage unit 2130, and a controller 2140.

The RF processor 2110 may perform a function for transmitting and receiving a signal via a wireless channel, such as band conversion and amplification of the signal. That is, the RF processor 2110 may up-convert a baseband signal provided from the baseband processor 2120 to an RF band signal, may transmit the same through an antenna, and may down-convert an RF band signal received through the antenna to a baseband signal. For example, the RF processor 2110 may include a transmission filter, a reception filter, an amplifier, a mixer, an oscillator, a digital-to-analog converter (DAC), an analog-to-digital converter (ADC), and the like. Although only one antenna is illustrated in FIG. 21, the UE may include multiple antennas. In addition, the RF processor 2110 may include multiple RF chains. Furthermore, the RF processor 2110 may perform beamforming. For the beamforming, the RF processor 2110 may adjust the phase and magnitude of each of signals transmitted and received through multiple antennas or antenna elements. In addition, the RF processing unit 2110 may perform multi-input multi-output (MIMO), and may receive multiple layers when performing a MIMO operation.

The baseband processor 2120 may perform functions of conversion between baseband signals and bitstrings according to the system's physical layer specifications. For example, during data transmission, the baseband processor 2120 may encode and modulate a transmitted bitstring to generate complex symbols. In addition, during data reception, the baseband processor 2120 may demodulate and decode a baseband signal provided from the RF processor 2110 to restore a received bitstring. For example, when following the orthogonal frequency division multiplexing (OFDM) scheme, during data transmission, the baseband processor 2120 may encode and modulate a transmitted bitstring to generate complex symbols, may map the complex symbols to subcarriers, and may configure OFDM symbols through an inverse fast Fourier transform (IFFT) operation and cyclic prefix (CP) insertion. In addition, during data reception, the baseband processor 2120 may split a baseband signal provided from the RF processor 2110 at the OFDM symbol level, may restore signals mapped to subcarriers through a fast Fourier transform (FFT) operation, and may restore a received bitstring through demodulation and decoding.

The baseband processor 2120 and the RF processor 2110 may transmit and receive signals as described above. Therefore, the baseband processor 2120 and the RF processor 2110 may be referred to as a transmitter, a receiver, a transceiver, or a communication unit. Furthermore, at least one of the baseband processor 2120 and the RF processor 2110 may include multiple communication modules to support multiple different radio access technologies. In addition, at least one of the baseband processor 2120 and the RF processor 2110 may include different communication modules to process signals in different frequency bands. For example, the different radio access technologies may include wireless LANs (for example, IEEE 802.11), cellular networks (for example, LTE), and the like. In addition, the different frequency bands may include super high frequency (SHF) (e.g., 2 NRHz) bands and millimeter wave (mmWave) (e.g., 60GHz) bands. The UE may transmit/receive signals to/from the base station by using the baseband processor 2120 and the RF processor2110. The signals may include control information and data.

The storage unit 2130 may store basic programs, application programs, and data, such as configuration information, for operation of the main base station. In particular, the storage unit 2130 may store information related to the second access node, which performs wireless communication using the second wireless access technology. In addition, the storage unit 2130 provides the stored data at the request of the controller 2140.

The controller 2140 controls the overall operation of the UE. For example, the controller 2140 may transmit/receive signals through the baseband processor 2120 and the RF processor 2110. In addition, the controller 2140 records data in the storage unit 2130 and reads the data from the storage unit 2130. To this end, the controller 2140 may include at least one processor. For example, the controller 2140 may include a communication processor (CP) configured to perform control for communication, and an application processor (AP) configured to control upper layers such as application programs.

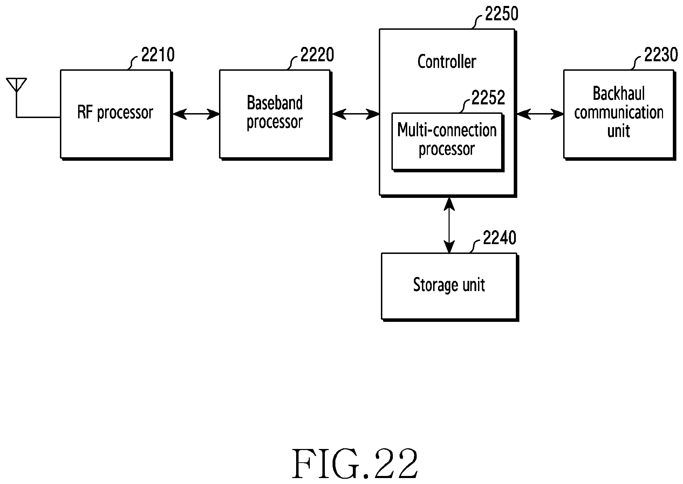

FIG. 22 is a block diagram illustrating a structure of a base station according to an embodiment of the disclosure.

Referring to FIG. 22, the base station may include an RF processor 2210, a baseband processor 2220, a backhaul communication unit 2230, a storage unit 2240, and a controller 2250.

The RF processor 2210 may perform a function for transmitting and receiving a signal via a wireless channel, such as band conversion and amplification of the signal. That is, the RF processor 2210 may up-convert a baseband signal provided from the baseband processor 2220 to an RF band signal, may transmit the same through an antenna, and may down-convert an RF band signal received through the antenna to a baseband signal. For example, the RF processor 2210 may include a transmission filter, a reception filter, an amplifier, a mixer, an oscillator, a DAC, and an ADC. Although only one antenna is illustrated in FIG. 22, the base station may include multiple antennas. In addition, the RF processor 2210 may include multiple RF chains. Furthermore, the RF processor 2210 may perform beamforming. For the beamforming, the RF processor 2210 may adjust the phase and magnitude of each of signals transmitted and received through multiple antennas or antenna elements. The RF processor may transmit one or more layers to perform a downward MIMO operation.

The baseband processor 2220 may perform functions of conversion between baseband signals and bitstrings according to the physical layer specifications of first radio access technology. For example, during data transmission, the baseband processor 2220 may encode and modulate a transmitted bitstring to generate complex symbols. In addition, during data reception, the baseband processor 2220 may demodulate and decode a baseband signal provided from the RF processor 2210 to restore a received bitstring. For example, when following the OFDM scheme, during data transmission, the baseband processor 2220 may encode and modulate a transmitted bitstring to generate complex symbols, may map the complex symbols to subcarriers, and may configure OFDM symbols through an IFFT operation and CP insertion. In addition, during data reception, the baseband processor 2220 may divide the baseband signal provided from the RF processor 2210 into units of OFDM symbols, restore signals mapped to subcarriers via the FFT operation, and then restore a received bit stream via demodulation and decoding. The baseband processor 2220 and the RF processor 2210 may transmit and receive signals as described above. Therefore, the baseband processor 2220 and the RF processor 2210 may be referred to as a transmitter, a receiver, a transceiver, a communication unit, or a wireless communication unit. The base station may transmit/receive signals to/from the UE by using the baseband processor 2220 and the RF processor 2210. The signals may include control information and data.

The backhaul communication unit 2230 provides an interface for performing communication with other nodes in the network. That is, the backhaul communication unit 2230 may convert bitstrings transmitted from the main base station to other nodes (for example, auxiliary base station, core network) to physical signals, and may convert physical signals received from the other nodes to bitstrings.

The storage unit 2240 may store basic programs, application programs, and data, such as configuration information, for operation of the main base station. In particular, the storage unit 2240 may store information on bearers allocated to the connected UE, measurement results reported from the connected UE, and the like. In addition, the storage unit 2240 may store information serving as a criterion for determining whether to provide or stop multiple connections to the UE. In addition, the storage unit 2240 provides the stored data at the request of the controller 2250.

The controller 2250 controls the overall operation of the base station. For example, the controller 2250 may transmit/receive signals through the baseband processor 2220 and the RF processor 2210 or through the backhaul communication unit 2230. In addition, the controller 2250 records data in the storage unit 2240 and reads the data from the storage unit 2240. To this end, the controller 2250 may include at least one processor.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary.

## Claims

1. A buffer status reporting method performed by a terminal, the method comprising:
receiving a capability request message for a buffer status report from a base station;
transmitting capability information for the buffer status report to the base station;
receiving configuration information for the buffer status report from the base station;
based on the configuration information, determining a buffer status report format; and
based on the buffer status report format, transmitting a buffer status to the base station.

2. The method of claim 1, wherein the capability information comprises information on whether the terminal is capable of reporting a size of uplink data meeting a remaining time threshold to the base station, and
wherein the configuration information comprises at least one of a remaining time upper bound for the uplink data and a remaining time lower bound for the uplink data.

3. The method of claim 1, wherein the determining of the buffer status report format comprises determining the buffer status report format, based on the number of logical channel groups (LCGs), and
wherein, in case that the number of logical channel groups is at least two, the buffer status report format comprises a field indicating whether a buffer size corresponding to each of the at least two logical channel groups exists.

4. The method of claim 2, wherein the buffer status report format comprises information indicating a size of data satisfying the remaining time threshold among uplink data stored in a buffer of the terminal.

5. A terminal device for performing a buffer status reporting method, the device comprising:
a transceiver; and
a processor connected to the transceiver,
wherein the processor is configured to:
receive a capability request message for a buffer status report from a base station;
transmit capability information for the buffer status report to the base station; receive configuration information for the buffer status report from the base station;
based on the configuration information, determine a buffer status report format; and
based on the buffer status report format, transmit a buffer status to the base station.

6. The terminal device of claim 5, wherein the capability information comprises information on whether the terminal is capable of reporting a size of uplink data meeting a remaining time threshold to the base station, and
wherein the configuration information comprises at least one of a remaining time upper bound for the uplink data and a remaining time lower bound for the uplink data.

7. The terminal device of claim 5, wherein, in determining the buffer status report format, the buffer status report format is determined based on the number of logical channel groups (LCGs), and
wherein, in case that the number of logical channel groups is at least two, the buffer status report format comprises a field indicating whether a buffer size corresponding to each of the at least two logical channel groups exists.

8. The device of claim 6, wherein the buffer status report format comprises information indicating a size of data satisfying the remaining time threshold among uplink data stored in a buffer of the terminal device.

9. A buffer status reporting method performed by a base station, the method comprising:
transmitting a capability request message for a buffer status report to a terminal;
receiving capability information for the buffer status report from the terminal;
transmitting configuration information for the buffer status report to the terminal; and
receiving a buffer status, based on a buffer status report format, from the terminal.

10. The method of claim 9, wherein the capability information comprises information on whether the terminal is capable of reporting a size of uplink data meeting a remaining time threshold to the base station, and
wherein the configuration information comprises at least one of a remaining time upper bound for the uplink data and a remaining time lower bound for the uplink data.

11. The method of claim 9, wherein the buffer status report format is determined based on the number of logical channel groups (LCGs), and
wherein, in case that the number of logical channel groups is at least two, the buffer status report format comprises a field indicating whether a buffer size corresponding to each of the at least two logical channel groups exists.

12. The method of claim 11, wherein the buffer status report format comprises information indicating a size of data satisfying the remaining time threshold among uplink data stored in a buffer of the terminal.

13. A base station device for performing buffer status reporting, the base station device comprising:
a transceiver; and
a processor connected to the transceiver,
wherein the processor is configured to:
transmit a capability request message for a buffer status report to a terminal;
receive capability information for the buffer status report from the terminal;
transmit configuration information for the buffer status report to the terminal; and
receive a buffer status, based on a buffer status report format, from the terminal.

14. The base station device of claim 13, wherein the capability information comprises information on whether the terminal is capable of reporting a size of uplink data meeting a remaining time threshold to the base station, and
wherein the configuration information comprises at least one of a remaining time upper bound for the uplink data and a remaining time lower bound for the uplink data.

15. The base station device of claim 13, wherein the buffer status report format is determined based on the number of logical channel groups (LCGs),
wherein, in case that the number of logical channel groups is at least two, the buffer status report format comprises a field indicating whether a buffer size corresponding to each of the at least two logical channel groups exists, and
wherein the buffer status report format comprises information indicating a size of data satisfying the remaining time threshold among uplink data stored in a buffer of the terminal.
